# EUROPÄISCHE PATENTANMELDUNG

(11) **EP 1 236 765 A1**
(43) Veröffentlichungstag der Anmeldung: **04.09.2002**
(21) Anmeldenummer: 01104919.4
(22) Anmeldetag: 28.02.2001
(51) Int. Cl.: C08K 3/36, C01B 33/145

(54) **Siliciumdioxiddispersion**

(71) Anmelder: hanse chemie GmbH, D-21502 Geesthacht (DE)
(72) Erfinder: Adam, Dr. Johannes, 01109 Dresden-Klotzsche (DE); Adebahr, Dr. Thorsten, 21037 Hamburg (DE); Pyrlik, Dr. Manfred, 21521 Wohltorf (DE); Roscher, Dr. Christof, 20537 Hamburg (DE); Wieczorrek, Robert, 22885 Barsbüttel (DE)
(74) Vertreter: Glawe, Delfs, Moll & Partner

(57) **Zusammenfassung**

Gegenstand der Erfindung ist eine Siliciumdioxiddispersion, die enthält:
a) eine äußere fließfähige Phase, die polymerisierbare Monomere, Oligomere und/oder Polymere enthält,
b) eine disperse Phase, die amorphes Siliciumdioxid enthält,

Sie ist dadurch gekennzeichnet, daß die mittels Neutronenkleinwinkelstreuung (SANS) gemessene mittlere Teilchengröße dₘₐₓ des Siliciumdioxids zwischen 3 und 50 nm bei einer maximalen Halbwertsbreite der Verteilungskurve von 1,5 dₘₐₓ liegt. Eine solche Siliciumdioxidispersion läßt sich auch bei hohen Konzentrationen der dispersen Phase gut verarbeiten und es lassen sich daraus polymere Werkstoffe mit vorteilhaften Eigenschaften, insbesondere mechanischen Eigenschaften, herstellen.

## Beschreibung

Die Erfindung betrifft eine Siliciumdioxiddispersion, die enthält:
a) eine äußere fließfähige Phase, die polymerisierbare Monomere, Oligomere und/oder Polymere enthält,
b) eine disperse Phase, die amorphes Siliciumdioxid enthält.

Es ist bekannt, polymere Werkstoffe wie z.B. Polyurethane, Polyharnstoffe oder sogenannte Reaktionsharze mit Füllstoffen zu versehen, um bestimmte Eigenschaften des polymeren Werkstoffes zu modifizieren. Bspw. können auf diese Weise Schlagzähigkeit, Biegefestigkeit, Härte oder elektrisches Isolationsvermögen verbessert werden.

Es ist bereits bekannt, Kieselsäure bzw. Siliciumdioxid (SiO₂) als Füllstoff in Polymeren zu verwenden. Verschiedene Verfahren zur Herstellung von SiO₂-Füllstoffen sind aus offenkundiger Vorbenutzung bekannt.

Natürliches (mineralisches) SiO₂ kann bspw. durch Mahlen auf eine gewünschte Teilchengröße gebracht werden und mit dem Polymer oder einem Polymervorprodukt vermischt werden. Gemahlenes SiO₂ zeigt in der Regel eine sehr breite Teilchengrößeverteilung und unregelmäßige Teilchenstruktur. Teilchengrößen von unter 1 µm sind durch mechanische Zerkleinerung des SiO₂ nicht oder nur schwer erzielbar.

Es ist ferner bekannt, aus wäßrigen Alkalisilicatlösungen SiO₂ durch Ansäueren auszufällen und anschließend zu trocknen. Dieses gefällte SiO₂ wird mit dem Polymer oder einem Vorprodukt vermischt. Auch hier erhält man unregelmäßige Teilchenstrukturen mit sehr breiten Teilchengrößeverteilungen.

Eine weitere Möglichkeit ist die Herstellung pyrogener Kieselsäure durch Flammenhydrolyse von Siliciumhalogenverbindungen. Dabei entstehen Teilchen sehr komplexer Morphologie und extrem breiter Teilchengrößeverteilung, da sich die bei der Flammenhydrolyse entstehenden Primärteilchen teilweise agglomerieren und andere assoziierte Überstrukturen bilden. Pyrogene Kieselsäure ist zudem teuer in der Herstellung.

Weiterhin bekannt ist es, organofunktionelle Silane (insbesondere Alkoxysilane) zu hydrolysieren und kondensieren, dadurch wäßrige oder wäßrig-alkoholische Kieselsäuresole herzustellen und diese Sole mit einem Polymervorprodukt zu vermischen. Anschließend kann Wasser bzw. Alkohol aus der Mischung entfernt werden. Dieses Verfahren ist teuer und im großtechnischen Maßstab nur schwer kontrollierbar.

Die geschilderten Verfahren haben ferner den Nachteil, daß die gezielte Herstellung von SiO₂-Füllstoffen mit monomodaler, enger Teilchengrößeverteilung nicht möglich ist, dieser Nachteil ist bei den drei erstgenannten Verfahren besonders ausgeprägt. Dies führt dazu, daß Dispersionen des Füllstoffes in Polymervorprodukten bereits bei verhältnismäßig niedrigen Füllstoffkonzentrationen unerwünschte rheologische Eigenschaften, insbesondere eine hohe Viskosität, zeigen, die die Verarbeitbarkeit erschweren.

Der vorliegenden Erfindung liegt die Aufgabe zugrunde, eine Siliciumdioxiddispersion der eingangs genannten Art zu schaffen, die auch bei höheren Füllstoffkonzentrationen gut verarbeitbar ist, die eine gute mechanische und/oder elektrische Eigenschaftsverbesserung des Polymerendprodukts bewirkt und die nach einem ebenfalls erfindungsgemäßen Verfahren aus kostengünstig erhältlichen Ausgangsmaterialien herstellbar sind.

Die Siliciumdioxiddispersion enthält dementsprechend:
a) eine äußere fließfähige Phase, die polymerisierbare Monomere, Oligomere und/oder Polymere enthält,
b) eine disperse Phase, die amorphes Siliciumdioxid enthält,
und ist dadurch gekennzeichnet, daß die mittels Neutronenkleinwinkelstreuung (SANS) gemessene mittlere Teilchengröße dₘₐₓ des Siliciumdioxids zwischen 3 und 50 nm bei einer maximalen Halbwertsbreite der Verteilungskurve von 1,5 dₘₐₓ liegt.

Das erfindungsgemäße Verfahren zur Herstellung einer solchen Dispersion zeichnet sich durch folgende Schritte aus:
a) Vorlegen einer wäßrigen Silicatlösung,
b) Polykondensation des Silicats bis zu einer Teilchengröße von 3-50 nm,
c) Einstellen des erhaltenen Kieselsäuresols auf einen alkalischen pH-Wert,
d) optional Einengen des Sols,
e) Vermischen des Sols mit Bestandteilen der äußeren, fließfähigen Phase der Dispersion,
f) optional Entfernen von Wasser und/oder anderen Lösungsmittelbestandteilen aus der Dispersion.

Zunächst seien einige im Rahmen der Erfindung verwendete Begriffe erläutert:

Die sogenannte äußere Phase der erfindungsgemäßen Siliciumdioxiddispersion ist fließfähig. Dies bedeutet, daß sie bei üblichen Verarbeitungstemperaturen (bspw. 18 bis 100°C) entweder flüssig oder doch hinreichend fließfähig bzw. viskos ist, um der gewünschten Weiterverarbeitung, insbesondere der Mischung mit weiteren Bestandteilen des herzustellenden polymeren Werkstoffs oder der Formung im Rahmen der Verarbeitung, unterzogen zu werden.

Diese äußere Phase enthält polymerisierbare Monomere, Oligomere und/oder Polymere (dies schließt Prepolymere ein). "Polymerisierbar" bedeutet, daß in dieser äußeren Phase noch polymerisierbare und/oder vernetzbare Gruppen enthalten sind, die im Rahmen der Weiterverarbeitung der Dispersion eine polymerisations- und/oder Vernetzungsreaktion eingehen können.

Die disperse Phase enthält amorphes Siliciumdioxid. Vorzugsweise besteht sie im wesentlichen aus amorphen Siliciumdioxiden. Als Verfahren zur Messung der amorphen Siliciumdioxidteilchen kommt die Neutronenkleinwinkelstreuung (SANS small angel neutron scattering) zur Anwendung. Dieses Meßverfahren ist dem Fachmann geläufig und bedarf hier keiner näheren Erläuterung. Bei der SANS-Messung enthält man eine Teilchengrößeverteilungskurve, bei der der Volumenanteil von Teilchen mit entsprechender Größe (Durchmesser) aufgetragen ist über dem Teilchendurchmesser. Als mittlere Teilchengröße im Sinne der Erfindung wird definiert der Peak einer solchen SANS-Verteilungskurve, also die größte Volumenfraktion mit Teilchen entsprechenden Durchmessers.

Die Halbwertsbreite der Verteilungskurve ist die Breite (in nm) der Verteilungskurve auf halber Höhe, also bei der Hälfte des Teilchenvolumenanteils bei dem Verteilungskurvenpeak dₘₐₓ, oder, anders ausgedrückt, die Breite der Verteilungskurve auf halber Höhe der Y-Achse (relativ zur Höhe der Kurve bei dₘₐₓ).

Die mittlere Teilchengröße liegt bevorzugt zwischen 6 und 40 nm, weiter vorzugsweise zwischen 8 und 30 nm, besonders bevorzugt zwischen 10 und 25 nm. Siliciumdioxiddispersionen gemäß der Erfindung lassen sich gut verarbeiten und zeigen auch bei höherer Konzentration der dispersen Phase eine Rheologie, die dem idealen Newtonschen Fließverhalten angenähert ist. Bei der gegebenen Teilchenkonzentration haben sie in der Regel eine niedrigere Viskosität als entsprechende Dispersionen des Standes der Technik.

Die Halbwertsbreite der Verteilungskurve liegt erfindungsgemäß bevorzugt bei maximal 1,2·dₘₐₓ, weiter vorzugsweise beträgt sie maximal dₘₐₓ, besonders bevorzugt beträgt sie maximal 0,75·dₘₐₓ.

Der Anteil der äußeren Phase an der Dispersion kann im Rahmen der Erfindung zwischen 20 und 90 Gew.-%, vorzugsweise 30 bis 80 Gew.-%, weiter vorzugsweise 40 bis 70 Gew.-% liegen. Dementsprechend kann der Anteil der dispersen Phase zwischen 10 und 80 Gew.-%, vorzugsweise 20 bis 70 Gew.-%, weiter vorzugsweise 30 bis 60 Gew.-% liegen. Die Siliciumdioxidteilchen der erfindungsgemäßen Dispersion sind vorzugsweise im wesentlichen kugelförmig. Die Dispersion kann zusätzlich Hilfsstoffe enthalten ausgewählt aus der Gruppe bestehend aus Lösungsmitteln, Weichmachern, Vernetzungsmitteln, Katalysatoren, Stabilisatoren, Dispergiermitteln, Härtungsmitteln, Reaktionsvermittlern und Mitteln zur Beeinflussung der Fließfähigkeit der Dispersion enthält.

Besonders bevorzugt ist die erfindungsgemäße Dispersion wasserfrei, sie enthält also nur noch geringe Spuren Wasser, die auch nach Durchführung üblicher unten noch näher beschriebener Verfahren zur Entfernung von Wasser verbleiben.

Die äußere Phase kann einer von zwei oder mehreren Reaktionsbestandteilen zur Herstellung eines Polymers sein. Bei den Polymeren kann es sich um thermoplastische oder duroplastische Kunststoffe handeln. Beispielhaft erwähnt seien Polyurethane, Polyharnstoffe, Epoxidharze, Polyesterharze, Polysiloxane (Silikone) sowie allgemein Reaktionsharze zur Herstellung duroplastischer Kunststoffe. Sie kann bspw. einen Stoff enthalten ausgewählt aus der Gruppe bestehend aus Polyolen, Polyaminen, linearen oder verzweigten Polyglykolethern, Polyestern und Polylactonen.

Als monomere Polyole können für den erfindungsgemäßen Zweck eine Vielzahl bekannter Verbindungen eingesetzt werden. Wegen der leichten Verfügbarkeit und der Vorteile, insbesondere der ausgezeichneten Verträglichkeit und guten Verarbeitbarkeit der resultierenden Produkte, werden für die äußere Phase der erfindungsgemäßen Dispersion als Polyole lineare oder verzweigte aliphatische Glykole bevorzugt eingesetzt, wobei die äußere Phase der SiO₂-Dispersion besonders bevorzugt Ethylenglykol, 1,2- oder 1,3-Propandiol, 1,2- oder 1,4-Butandiol, 1,6-Hexandiol, 2,2,4-Trimethylpentandiol-1,3 und/oder Neopentylglykol aufweist.

Weiterhin werden als aliphatische Polyole vorzugsweise Glycerin, Trimethylolpropan sowie Zuckeralkohole, besonders Erythrit, Xylit, Mannit und/oder Sorbit, eingesetzt. Ferner kann die äußere Phase als bevorzugte Polyole ein oder mehrere alicyclische Polyole, insbesondere 1,4-Cyclohexandimethanol, und/oder Saccharose aufweisen.

Als polymere Polyole kommen für die äußere Phase vorzugsweise solche mit einem mittleren Molekulargewicht von 200 bis 20 000 in Frage, wobei das polymere Polyol vorzugsweise ein solches auf der Basis von (Meth-)Acrylsäurealkylenglykolestern ist. Die äußere Phase der erfindungsgemäßen Dispersion kann ferner vorzugsweise polymere Polyole aufweisen, die durch Verseifung oder partielle Verseifung von vinylesterhaltigen Polymeren erhalten werden.

Als Polyether kommen für die äußere Phase vor allem die durch ringöffnende Polymerisation cyclischer Ether in Anwesenheit von Polyolen, z.B. den vorstehend genannten Polyolen, erhältlichen linearen oder verzweigten Polyglykolether in Betracht, von denen wegen ihrer relativ leichten Verfügbarkeit Polyethylenglykol, Polypropylenglykol und/oder Polytetramethylenglykol oder deren Copolymere bevorzugt sind.

Als Polyester kommen für die äußere Phase der erfindungsgemäßen Dispersion solche auf der Basis von Polyolen und aliphatischen, cycloaliphatischen oder aromatischen Dicarbonsäuren in Betracht, und zwar alle entsprechenden, bei Temperaturen von 18 bis 100°C flüssigen gesättigten Polyester, vorzugsweise Bernsteinsäureester, Glutarsäureester, Adipinsäureester, Phthalsäureester, Isophthalsäureester, Terephthalsäureester und/oder die Ester der entsprechenden Hydrierungsprodukte, wobei die Alkoholkomponente aus monomeren oder polymeren Polyolen besteht, beispielsweise aus solchen der vorstehend genannten Art.

Weitere erfindungsgemäß verwendbare Polyester sind aliphatische Polylactone, bevorzugt ε-Polycaprolacton, und/oder Polycarbonate, die z.B. durch Polykondensation von Diolen mit Phosgen zugänglich sind. Vorzugsweise werden für die äußere Phase Polykohlensäureester des Bisphenols A mit einem mittleren Molekulargewicht von 500 bis 100 000 eingesetzt.

Anstelle der vorstehend genannten Polyole, Polyether und gesättigten Polyester können für den erfindungsgemäßen Zweck auch Mischungen der vorgenannten Stoffklassen für die äußere Phase der erfindungsgemäßen Dispersion eingesetzt werden. Die Verwendung solcher Mischungen kann z. B im Hinblick auf eine Verringerung der Glas- bzw. Schmelztemperatur der resultierenden Produkte von Vorteil sein.

Zum Zwecke der Beeinflussung der Viskosität der äußeren Phase, insbesondere der Viskositätserniedrigung oder der Verflüssigung, können den erfindungsgemäß für die äußere Phase vorgesehenen Polyolen, Polyethern und gesättigten Polyestern bzw. deren Mischungen gegebenenfalls noch geeignete Hilfsstoffe, insbesondere Lösungsmittel, Weichmacher, Verdünner und dergleichen, zugesetzt werden.

Die äußere Phase kann im Rahmen der Erfindung wenigstens ein Reaktionsharz enthalten.

Im Sinne der vorliegenden Erfindung werden unter Reaktionsharzen Vorprodukte oder Prepolymere verstanden, die vor und während des Verarbeitungs- bzw. Formgebungsprozesses flüssig bzw. plastisch sind und nach der normalerweise formgebenden Verarbeitung durch Polyreaktion (Polymerisation, Polykondensation, Polyaddition) duroplastische Kunststoffe ergeben. Durch die Polyreaktion erhält man ein dreidimensional vernetztes, hartes, nicht schmelzbares Harz, den Duroplasten, der sich damit grundlegend von thermoplastischen Kunststoffen unterscheidet, die bekanntlich durch erneutes Erhitzen immer wieder verflüssigt bzw. plastifiziert werden können.

Infolge der meist sehr hohen Vernetzungsdichte weisen die vernetzten Reaktionsharze eine Reihe wertvoller Eigenschaften auf, die der Grund dafür sind, daß die neben den Thermoplasten zu den am meisten verwendeten Polymeren gehören. Zu diesen wertvollen Eigenschaften zählen insbesondere Härte, Festigkeit, Chemikalienresistenz und Temperaturbeständigkeit. Aufgrund dieser Eigenschaften werden diese Reaktionsharze auf den verschiedensten Gebieten angewendet, bspw. für die Herstellung von faserverstärkten Kunststoffen, für Isolierstoffe in der Elektrotechnik, zur Herstellung von Konstruktionsklebstoffen, Schichtpreßstoffen, Einbrennlacken und dergleichen.

Als Reaktionsharze sind erfindungsgemäß alle polymeren oder oligomeren organischen Verbindungen geeignet, die mit einer für eine Härtungsreaktion ausreichenden Zahl geeigneter reaktiver Gruppen versehen sind. Dabei ist es für den erfindungsgemäßen Zweck unerheblich, welcher Vernetzungs- oder Härtungsmechanismus im konkreten Fall abläuft. Daher sind als Ausgangsprodukte für die Herstellung der erfindungsgemäß modifizierten Reaktionsharze allgemein alle Reaktionsharze geeignet, die sich zu Duroplasten verarbeiten lassen, unabhängig vom jeweiligen Vernetzungsmechanismus, der bei der Härtung des jeweiligen Reaktionsharzes abläuft.

Grundsätzlich lassen sich die erfindungsgemäß als Ausgangsprodukte verwendbaren Reaktionsharze entsprechend der Art der Vernetzung durch Addition, Kondensation oder Polymerisation in drei Gruppen einteilen.

Aus der ersten Gruppe der durch Polyaddition vernetzten Reaktionsharze werden bevorzugt ein oder mehrere Epoxidharze, Urethanharze und/oder lufttrocknende Alkydharze als Ausgangsmaterial ausgewählt. Epoxid- und Urethanharze werden in der Regel durch Zusatz stöchiometrischer Mengen eines Hydroxyl-, Amino-, Carboxyl- oder Carbonsäureanhydridgruppen enthaltenden Härters vernetzt, wobei die Härtungsreaktion durch Addition der Oxiran- bzw. Isocyanatgruppen des Harzes an die entsprechenden Gruppen des Härters erfolgt. Bei Epoxidharzen ist auch die sogenannte katalytische Härtung durch Polyaddition der Oxirangruppen selbst möglich. Lufttrocknende Alkydharze vernetzen durch Autooxidation mit Luftsauerstoff.

Beispiele für die zweite Gruppe der durch Polykondensation vernetzten Reaktionsharze sind Kondensationsprodukte von Aldehyden, z. B. Formaldehyd, mit amingruppenhaltigen aliphatischen oder aromatischen Verbindungen, z. B. Harnstoff oder Melamin, oder mit aromatischen Verbindungen wie Phenol, Resorcin, Kresol, Xylol usw., ferner Furanharze, gesättigte Polyesterharze und Silikonharze. Die Härtung erfolgt hierbei meist durch Temperaturerhöhung unter Abspaltung von Wasser, niedermolekularen Alkoholen oder anderen niedermolekularen Verbindungen. Bevorzugt werden als Ausgangsmaterial für die erfindungsgemäß modifizierten Reaktionsharze ein oder mehrere Phenol-Harze, Resorcin-Harze und/oder Kresol-Harze, und zwar sowohl Resole als auch Novolake, ferner Harnstoff-Formaldehyd- und Melamin-Formaldehyd-Vorkondensate, Furanharze sowie gesättigte Polyesterharze und/oder Silikonharze ausgewählt.

Aus der dritten Gruppe der durch Polymerisation vernetzten Reaktionsharze sind ein oder mehrere Homo- oder Copolymerisate der Acrylsäure und/oder Methacrylsäure oder ihrer Ester, ferner ungesättigte Polyesterharze, Vinylesterharze und/oder Maleinimidharze als Ausgangsharze für die erfindungsgemäß modifizierten Reaktionsharze bevorzugt. Diese Harze weisen polymerisationsfähige Doppelbindungen auf, durch deren Polymerisation oder Copolymerisation die dreidimensionale Vernetzung bewirkt wird. Als Starter dienen zur Bildung freier Radikale befähigte Verbindungen, z. B. Peroxide, Peroxoverbindungen oder Azogruppen enthaltende Verbindungen. Auch eine Initiierung der Vernetzungsreaktion durch energiereiche Strahlung, wie UV- oder Elektronenstrahlung, ist möglich.

Nicht nur die vorstehend genannten Reaktionsharze, sondern auch alle anderen, die zur Herstellung von duroplastischen Kunststoffen geeignet sind, lassen sich in der erfindungsgemäß vorgeschlagenen Weise modifizieren und ergeben nach der Vernetzung und Härtung Duroplaste mit erheblich verbesserter Bruch- und Schlagzähigkeit, wobei andere wesentliche, für die Duroplasten charakteristische Eigenschaften, wie Festigkeit, Wärmeformbeständigkeit und Chemikalienresistenz, im wesentlichen unbeeinflußt erhalten bleiben. Hierbei sind die erfindungsgemäß eingesetzten Reaktionsharze oder Reaktionsharzgemische bei Temperaturen im Bereich von 18 bis 100°C flüssig. Ferner weisen die eingesetzten Reaktionsharze oder Reaktionsharzgemische ein mittleres Molekulargewicht im Bereich von 200 bis 500.000, vorzugsweise von 300 bis 20.000 auf.

Die Erfindung besitzt insbesondere bei der Anwendung im Rahmen von Reaktionsharzen erhebliche Vorteile. Reaktionsharze des Standes der Technik sind infolge des hochvernetzten Zustandes spröde und haben eine geringe Schlagzähigkeit, insbesondere bei niedrigeren Temperaturen. Die Bruch- und Schlagzähigkeit solcher duroplastischen Kunststoff kann erfindungsgemäß erheblich verbessert werden, ohne daß Härte, Festigkeit und Erweichungstemperatur nachteilig beeinflußt werden. Erfindungsgemäß können somit Reaktionsharze und daraus duroplastische Kunststoffe hergestellt werden, bei denen einerseits das flüssige Reaktionsharz trotz eines hohen Anteils Füllstoffes noch gut verarbeitbar ist und andererseits durch den Füllzusatz monomodaler Teilchen geringen Durchmessers eine erhebliche Verbesserung der mechanischen Eigenschaften (insbesondere Zugfestigkeit, Bruchdehnung oder Bruchzähigkeit) des ausgehärteten duroplastischen Kunststoffes eintritt.

Bei der Durchführung des erfindungsgemäßen Verfahrens wird zunächst eine wäßrige Silicatlösung vorgelegt. Es kann sich um eine Alkalisilicatlösung, insbesondere eine Natrium- und oder Kaliumsilicatlösung handeln. Die Konzentration dieser wäßrigen Silicatlösung liegt vorzugsweise im Bereich zwischen 20 und 50 Gew.-%. Das bevorzugte Verhältnis von SiO₂ zu Na₂O liegt zwischen 2 und 3.

Im nächsten Schritt wird das Silikat bis zu einer Teilchengröße von 3 bis 50 nm polykondensiert. Dies kann bspw. geschehen durch Behandeln der Alkalisilicatlösung mit sauren Ionenaustauschern, die die Alkaliionen gegen H⁺-Ionen austauschen und damit die gewünschte Polykondensation auslösen.

Das erhaltene Kieselsäuresol wird auf einen alkalischen pH-Wert (pH > 8, bevorzugt > 9, weiter bevorzugt > 10, besonders bevorzugt zwischen 10 und 12) eingestellt und auf diese Weise gegen weitere Polykondensation oder Agglomeration bereits vorhandener Teilchen stabilisiert.

Optional kann das Sol eingeengt werden, bspw. durch Destillieren, vorzugsweise auf eine SiO₂-Konzentration von 30 bis 40 Gew.-%.

In nächsten Schritt wird das Sol mit Bestandteilen der äußeren, fließfähigen Phase der Dispersion vermischt.

Anschließend werden besonders bevorzugt Wasser und/oder andere Lösungsmittelbestandteile aus der Dispersion entfernt, da aus den erfindungsgemäßen Dispersionen besonders bevorzugt wasserfreie Kunststoffe (sogenannte wasserfreie Nanokomposite) hergestellt werden sollen. Es können sämtliche übliche, dem Fachmann geläufige, Trennverfahren angewendet werden wie bspw. Destillation, vorzugsweise im Vakuum, Membrantrennung, ggf. Sedimentation, Lösungsmittelextraktion, Verwendung eines Molekularsiebs etc. Bei der Destillation können ggf. Lösungsmittel zugesetzt werden, die mit Wasser ein Azeotrop bilden und so als azeotropes Schleppmittel wirken.

Bevorzugt ist es, wenn der Siliciumdioxidanteil einer erfindungsgemäßen Dispersion ausschließlich und damit in seiner Gesamtheit nach dem genannten Verfahren hergestellt wird. Im Rahmen der Erfindung ist es jedoch auch möglich, einen Teil des Siliciumdioxids der Dispersion nach Verfahren des Standes der Technik herzustellen, so lange dabei die disperse Phase insgesamt die Kriterien des Anspruchs 1 erfüllt. Insbesondere kann im Rahmen der Erfindung ein Teil der dispersen Phase durch das in der Beschreibungseinleitung geschilderte Verfahren der Hydrolyse und Kondensation von organofunktionellen Silanen (insbesondere Alkoxysilanen) hergestellt werden. Es kann sich um Mono-, Di-, Tri- oder Tetraalkoxysilane handeln, wobei ein genügender Anteil Silane mit drei oder vier hydrolisierbaren Gruppen vorhanden sein muß. Bevorzugt sind insbesondere Mono-, Di- oder Trimethoxy- oder -ethoxysilane, bei denen einer der nicht hydrolisierbaren Reste ein aliphatischer (bevorzugt mit 1 bis 18 C-Atomen) oder aromatischer Kohlenwasserstoffrest ist, der zusätzlich eine funktionelle Gruppe aufweisen kann, bspw. eine Vinyl-, Allyl-, (Meth)-acryl-, Glycidyl-, Halogen-, Hydroxyl- oder Mercaptogruppe. Ggf. vorhandene weitere nicht hydrolisierbare Reste sind bevorzugt Methyl oder Ethyl.

Sofern ein Teil der dispersen Phase auf die genannte Weise durch Silanhydrolisierung hergestellt wird, können ggf. zusätzliche Lösungsmittel zugesetzt werden, die als Lösungsvermittler zwischen Silan und äußerer Phase der Dispersion dienen können. Geeignet sind bspw. wassermischbare niedermolekulare Alkohole (bevorzugt C₁- bis C₄-Alkohole), Ketone, Amine, Amide oder heterocyclische Verbindungen wie bspw. THF oder Pyridin.

Gegenstand der Erfindung ist ferner die Verwendung einer oben definierten Dispersion zur Herstellung eines polymeren Werkstoffs. Der polymere Werkstoff kann ein thermoplastischer oder duroplastischer Kunststoff sein. Beispielhaft seien genannt Polyurethane, Polyharnstoffe, Epoxidharze, Polyesterharze, Polysiloxane sowie sämtlich duroplastischen, aus Reaktionsharzen herstellbaren Kunststoffe.

Bspw. kann die erfindungsgemäße Dispersion Polyole oder Polyamine der oben näher beschriebenen Art enthalten, aus denen sich Polyurethane bzw. Polyharnstoffe herstellen lassen. Die Dispersion wird dann in bekannter Weise mit Polyisocyanaten vermischt und zur Reaktion gebracht, um die gewünschten polymeren Werkstoffe herzustellen, deren Eigenschaften durch die disperse SiO₂-Phase entsprechend modifiziert sind. Die Polymerisationsreaktion kann in dem Fachmann geläufiger Weise ein- oder mehrstufig, ggf. bei erhöhter Temperatur ausgeführt werden.

Enthält die erfindungsgemäße Dispersion ein Reaktionsharz, kann dies in bekannter Weise nach den bekannten ein- oder mehrstufigen Verfahren der Reaktionsharztechnik zu einem vorzugsweise duroplastischen Kunststoff weiterverarbeitet werden. Vorzugsweise unter Zusatz von Katalysatoren, Härtern oder Vernetzern findet die Ausbildung eines dreidimensionalen polymeren Netzwerkes statt. Weitere Additive und Zuschlagsstoffe können dem Reaktionsharz vor der Vernetzung zugefügt werden, bspw. organische oder anorganische Füllstoffe, Fasern, Pigmente, Fließhilfsmittel, Reaktionsbeschleuniger oder -verzögerer, Weichmacher oder dergleichen.

Nachfolgend werden Ausführungsbeispiele der Erfindung erläutert. Alle %-Angaben in den Beispielen sind Gew.-%, die Angabe "Teile" bezieht sich auf Massenteile. Die Größenverteilung der SiO₂-Teilchen (auch Durchmesserverteilung genannt) wird in den Beispielen als x ± y nm angegebenen. X ist dabei der Peak dₘₐₓ der Verteilungskurve, y die halbe Halbwertsbreite der Verteilungskurve. Dementsprechend beträgt die Halbwertsbreite der Verteilungskurve 2y.

### Beispiel 1

Eine handelsübliche wäßrige Alkalisilicatlösung mit einem Wassergehalt von 47 % und einem Verhältnis von SiO₂ zu Na₂O von 2,4 wurde mit demineralisiertem Wasser auf einen Wassergehalt von 97 % verdünnt. 100 Teile dieser verdünnten Lösung wurden mit einer Rate von 20 Teilen pro Stunde durch eine mit einem handelsüblichen sauren Ionenaustauscher gefüllten Säule geleitet und danach einer Destillationsvorlage zugeführt, in der die zulaufende deionisierte Silicatlösung bei Siedetemperatur gehalten wurde und das abdestillierende Wasser aus der Lösung entfernt wurde. Nach dem Ende des Zulaufes wurde das gebildete Kieselsäuresol durch weiteres Erhitzen auf 10 Teile eingeengt.

### Beispiele 2 bis 4

Jeweils 100 Teile des in Bsp. 1 hergestellten Sols wurden mit 2000 Teilen Isopropanol vermischt und das Wasser durch atmosphärische Destillation bis auf einen nach der Karl-Fischer-Methode bestimmten Gehalt von kleiner als 0,1 % entfernt. Danach wurden jeweils 80 Teile der nachfolgenden Polyether unter Rühren zugegeben:
- Beispiel 2:: Polypropylendiol ( PPG), Molmasse (MM) 1000
- Beispiel 3:: Mit 15 % Polyethylenglykol (PEG) endgecapptes PPG, MM 4000
- Beispiel 4:: Polypropylentriol, MM 6000

Anschließend wurden die flüchtigen Bestandteile destillativ bei 50 °C und einem Vakuum von bis zu 85 mbar entfernt.

Die drei erhaltenen Proben waren wasserklar. Die Teilchengrößenverteilung wurde mittels SANS gemessen und ergab an allen drei Proben eine im Rahmen der Messgenauigkeit übereinstimmende Durchmesserverteilung von 47 ± 11 nm.

### Beispiel 5

Beispiel 1 wurde wiederholt mit der Abweichung, daß der Wassergehalt der verdünnten Alkalisilicatlösung auf 98 % eingestellt wurde sowie die Zulaufgeschwindigkeit zur Destillationsvorlage 15 Teile pro Stunde betrug. Nach dem Einengen wurden 9 Teile Kieselsäuresol erhalten.

### Beispiele 6 bis 9

Jeweils 100 Teile des in Bsp. 5 hergestellten Sols wurden mit 2,5 Teilen Trimethylmethoxysilan versetzt und gerührt. Zu diesen Mischungen wurden 2000 Teile Isopropanol gegeben und das Wasser durch atmosphärische Destillation bis auf einen nach der Karl-Fischer-Methode bestimmten Gehalt von kleiner als 0,1 % entfernt. Danach wurden jeweils 80 Teile der nachfolgenden Polyether unter Rühren zugegeben:
- Beispiel 6:: PPG, MM 12000
- Beispiel 7:: PPG mit 10 % Ethylenoxid statistisch copolymerisiert, MM 3000
- Beispiel 8:: Polypropylentriol, MM 550
- Beispiel 9:: Mit 20 % PEG endgecapptes Polypropylentriol, MM 2000

Anschließend wurden die flüchtigen Bestandteile destillativ bei 50 °C und einem Vakuum von bis zu 85 mbar entfernt.

Die vier erhaltenen Proben waren wasserklar. Die Teilchengrößenverteilung wurde mittels SANS gemessen und ergab an allen Proben eine im Rahmen der Messgenauigkeit übereinstimmende Durchmesserverteilung von 30 ± 7 nm.

### Beispiel 10

Beispiel 1 wurde wiederholt mit der Abweichung, daß die Zulaufgeschwindigkeit zur Destillationsvorlage 30 Teile pro Stunde betrug. Nach dem Einengen wurden 15 Teile Kieselsäuresol erhalten.

### Beispiel 11

100 Teile des in Bsp. 10 hergestellten Sols wurden mit 6,0 Teilen γ-Methacryloxypropyltrimethoxysilan unter Rühren versetzt und anschließend in eine Lösung aus 16 Teilen eines 2:1-Gemisches von Bis-Glycidylmethacrylat und Tetraethylenglycoldimethacrylat in 640 Teilen Isopropanol gegeben. Die flüchtigen Bestandteile wurden anschließend bei 50 °C und 85 mbar destillativ entfernt. Man erhielt eine wasserklare Dispersion mit einer durch SANS ermittelten Durchmesserverteilung von 8 ± 2,5 nm.

### Beispiel 12

100 Teile des in Bsp. 10 hergestellten Sols wurden mit 5,9 Teilen γ-Glycidoxypropyldiethoxymethylsilan unter Rühren versetzt und anschließend in eine Lösung aus 60 Teilen eines cycloaliphatischen Epoxidharzes ('ERL 4221', Fa. Union Carbide) in 620 Teilen Isopropanol gegeben. Die flüchtigen Bestandteile wurden anschließend bei 50 °C und 85 mbar destillativ entfernt. Man erhielt eine wasserklare Dispersion mit einer durch SANS ermittelten Durchmesserverteilung von 8 ± 2,5 nm.

### Beispiel 13

100 Teile des in Bsp. 10 hergestellten Sols wurden unter Rühren mit 588 Teilen Isopropanol versetzt. Anschließend wurde bei 40 °C und 85 mbar auf 147 Teile eingeengt. Danach wurden 5,7 Teile γ-Glycidoxypropyltrimethoxysilan unter Rühren zugegeben und anschließend in eine Lösung aus 60 Teilen eines cycloaliphatischen Epoxidharzes ('ERL 4221', Fa. Union Carbide) in 168 Teilen Isopropanol gegeben. Die flüchtigen Bestandteile wurden anschließend bei 50 °C und 3 mbar destillativ entfernt. Man erhielt eine wasserklare Dispersion mit einer durch SANS ermittelten Durchmesserverteilung von 8 ± 2 nm.

### Beispiel 14

Beispiel 1 wurde wiederholt mit der Abweichung, daß die Zulaufgeschwindigkeit zur Destillationsvorlage 43 Teile pro Stunde betrug. Nach dem Einengen wurden 8 Teile Kieselsäuresol erhalten.

### Beispiel 15

100 Teile des in Bsp. 14 hergestellten Sols wurden mit 5,6 Teilen Trimethoxyphenylsilan versetzt und gerührt. Danach wurde diese Mischung in 610 Teile Isopropanol eingerührt und bei 40 °C und 85 mbar auf 118 Teile eingeengt. Anschließend wurden 225 Teile Isopropylacetat zugegeben und die Mischung wieder destillativ bei 40 °C und 85 mbar auf 134 Teile eingeengt. Diese Mischung wurde nunmehr in 125 Teile einer 50%igen Lösung von Bisphenol-A-Epoxidharz ('Epilox A 17-01', Fa. Leuna Harze GmbH) in Isopropylacetat gegeben und anschließend die flüchtigen Bestandteile bei 50 °C und 3 mbar destillativ entfernt. Man erhielt eine leicht opake Dispersion mit einer durch SANS ermittelten Durchmesserverteilung von 16 ± 5 nm.

### Beispiel 16

100 Teile des in Bsp. 14 hergestellten Sols wurden mit 2,8 Teilen Methoxytrimethylsilan versetzt und gerührt. Danach wurde diese Mischung in 820 Teile Isopropanol eingerührt und bei 40 °C und 85 mbar auf 118 Teile eingeengt. Danach wurde diese Mischung mit 423 Teilen einer 15 %igen Lösung von Bisphenol-F-Epoxidharz ('Epilox F 16-01', Fa. Leuna Harze GmbH) in Isopropylacetat verrührt und anschließend die flüchtigen Bestandteile bei 50 °C und 3 mbar destillativ entfernt. Man erhielt eine leicht opake Dispersion mit einer durch SANS ermittelten Durchmesserverteilung von 17 ± 5 nm.

### Beispiel 17

100 Teile des in Bsp. 14 hergestellten Sols wurden mit 6,0 Teilen γ-Methacryloxypropyltrimethoxysilan unter Rühren versetzt und anschließend in eine Lösung aus 93 Teilen eines Polyesteracrylates ('Ebecryl 3500', Fa. UCB Chemicals) in 480 Teilen Isopropanol gegeben. Die flüchtigen Bestandteile wurden anschließend bei 50 °C und 85 mbar destillativ entfernt.

Man erhielt eine wasserklare Dispersion mit einer durch SANS ermittelten Durchmesserverteilung von 15 ± 4,5 nm.

### Beispiel 18

100 Teile des in Bsp. 14 hergestellten Sols wurden mit 2,8 Teilen γ-Methacryloxypropyltrimethoxysilan unter Rühren versetzt und anschließend in eine Lösung aus 50 Teilen eines propoxylierten Neopentylglycoldiacrylates('GENOMER 1230', Fa. Rahn AG) in 480 Teilen Isopropanol gegeben. Die flüchtigen Bestandteile wurden anschließend bei 50 °C und 85 mbar destillativ entfernt. Man erhielt eine wasserklare Dispersion mit einer durch SANS ermittelten Durchmesserverteilung von 17 ± 5 nm.

### Beispiel 19

100 Teile des in Bsp. 14 hergestellten Sols wurden mit 3,0 Teilen Methoxytrimethylsilan versetzt und gerührt. Danach wurde diese Mischung in 820 Teile Isopropanol eingerührt und bei 40 °C und 85 mbar auf 95 Teile eingeengt. Anschließend wurden 545 Teile Vinylbenzol zugegeben und bei 35 °C und 75 mbar auf 76 Teile eingeengt. Schließlich wurden 56 Teile eines ungesättigten Polyesterharzes in Vinylbenzol ('Ludopal P 6', Fa. BASF AG) zugegeben und bei 35 °C und 3 mbar auf 95 Teile eingeengt. Man erhielt eine leicht opake Dispersion mit einer durch SANS ermittelten Durchmesserverteilung von 16 ± 4 nm.

### Beispiel 20

100 Teile des in Bsp. 14 hergestellten Sols wurden mit 3,2 Teilen Methoxytrimethylsilan versetzt und gerührt. Danach wurde diese Mischung in 790 Teile Isopropanol eingerührt und bei 40 °C und 85 mbar auf 109 Teile eingeengt. Anschließend wurden 730 Teile Vinylbenzol zugegeben und bei 35 °C und 75 mbar auf 118 Teile eingeengt. Schließlich wurden 113 Teile eines Vinylesters in Vinylbenzol ('Derakane 411-370', Fa. Dow Chemical) zugegeben und bei 35 °C und 3 mbar auf 150 Teile eingeengt. Man erhielt eine leicht opake Dispersion mit einer durch SANS ermittelten Durchmesserverteilung von 17 ± 4,5 nm.

### Beispiel 21

100 Teile des in Beispiel 14 hergestellten Sols wurden unter Rühren mit 588 Teilen Isopropanol versetzt. Anschließend wurde bei 40°C und 85 mbar auf 147 Teile eingeengt. Danach wurden 5,7 Teile γ-Glycidoxypropyltrimethoxysilan unter Rühren zugegeben und anschließend in eine Lösung aus 60 Teilen eines cycloaliphatischen Epoxidharzes ("ERL 4221", Fa. Union Carbide) in 168 Teilen Isopropanol gegeben. Die flüchtigen Bestandteile wurden anschließend bei 50°C und 2 mbar destillativ entfernt. Man erhielt eine wasserklare Dispersion mit einer durch SANS ermittelten Durchmesserverteilung von 15 ± 4 nm.

### Beispiel 22

In diesem Beispiel werden die rheologischen Eigenschaften von Harzen und Polyetherpolyolen, die einerseits mit pyrogener Kieselsäure des Standes der Technik und andererseits mit erfindungsgemäßen SiO₂-Dispersionen gefüllt sind, verglichen. AEROSIL® R8200 ist eine durch Flammenhydrolyse aus Siliciumtetrachlorid hergestellte pyrogene Kieselsäure, erhältlich von der Fa. Degussa.

**Tabelle 1:**

| **Viskositäten SiO**_{**2**}**-gefüllter Harze und Polyether- polyole** | | | |
|---|---|---|---|
| Harz/Polyether-polyol (Hersteller) | SiO₂-Gehalt [%] | Art der SiO₂-Partikel | η (25°C) [mPa·s] |
| ERL 4221 (Union Carbide) | 0 | - | 381 |
| ERL 4221 (Union Carbide) | 23 | Bsp. 21 | 422 |
| ERL 4221 (Union Carbide) | 40 | Bsp. 21 | 25810 |
| ERL 4221 (Union Carbide) | 5 | AEROSIL® R8200 | 491 |
| ERL 4221 (Union Carbide) | 23 | AEROSIL® R8200 | pastös |
| Baycoll BT 1380 (Bayer) | 0 | - | 595 |
| Baycoll BT 1380 (Bayer) | 20 | Bsp. 8 | 1030 |
| Baycoll BT 1380 (Bayer) | 50 | Bsp. 8 | 19800 |
| Baycoll BT 1380 (Bayer) | 5 | AEROSIL® R8200 | 815 |
| Baycoll BT 1380 (Bayer) | 10 | AEROSIL® R8200 | 1487 |
| Baycoll BT 1380 (Bayer) | 20 | AEROSIL® R8200 | pastös |
| BisGMA/TEDMA | 0 | - | 1194 |
| BisGMA/TEDMA | 16 | Bsp. 11 | 2001 |
| BisGMA/TEDMA | 45 | Bsp. 11 | 42900 |
| BisGMA/TEDMA | 5 | AEROSIL® R8200 | 1864 |
| BisGMA/TEDMA | 10 | AEROSIL® R8200 | 3899 |
| BisGMA/TEDMA | 20 | AEROSIL® R8200 | pastös |

Man erkennt, daß sich erfindungsgemäß hohe SiO₂-Gehalte realisieren lassen, ohne daß die Viskosität übermäßig ansteigt und damit die Verarbeitbarkeit erschwert bzw. unmöglich macht. Dagegen führt ein AEROSIL-Gehalt von etwa 20 Gew.-% regelmäßig bereits zu einer pastösen Konsistenz des Harzes bzw. Polyetherpolyols.

### Beispiel 23

Der vorteilhafte Einfluß erfindungsgemäßer SiO₂-Dispersionen auf die mechanischen Eigenschaften von Polymeren wird am Beispiel von Epoxidharzen erläutert. In diesem Beispiel wird das Epoxidharz ERL 4221 mit der SiO₂-Dispersion des Beispiels 21 auf die in Tab. 2 angegebenen SiO₂-Gehalte vermischt. Für die UV-Härtung (c bis e) wurden die Proben mit 1% UV-Initiator ("CYRACURE® UVI-6974", der Fa. Union Carbide) versetzt, in Aluminium-Schalen gegeben und bei 60°C und 1 mbar 15 Minuten lang entgast. Anschließend wurden die Proben 10 Minuten mit einer UV-Lampe (UVASPOT 400 H, der Fa. Dr. K. Hönle GmbH) im Abstand von 20 cm bestrahlt und 1 Stunde bei 160°C getempert. Für die thermische Härtung (a und b) wurde das Epoxyäquivalentgewicht nach der Norm DIN 16 945 bestimmt und 1 Äquivalent eines cycloaliphatischen Anhydrides ("ALBIDUR HE 600", Fa. hanse chemie GmbH) zugegeben. Die Proben werden in Aluminium-Schalen gegeben und bei 60°C und 1 mbar 15 Minuten lang entgast. Die Härtung erfolgt in 4 Stufen: 90 Minuten bei 90°C, 120 Minuten bei 120°C, 120 Minuten bei 140°C und 60 Minuten bei 160°C.

Für die nachfolgenden bruchmechanischen Untersuchungen zur Bestimmung der Bruchzähigkeit K_{IC}, der Bruchenergie G_{IC} und des E-Moduls E wurden aus dem kompakten Material CT-Normprüfkörper mit einer Kantenlänge von 33 mm gefräst, die nach der Norm ASTM E 399-83 unter quasistatischer Belastung geprüft wurden. Biegeprüfungen wurden in Dreipunktbiegeversuchen entsprechend der Norm DIN 53 452 durchgeführt.

**Tabelle 2:**

| **Ergebnisse der bruchmechanischen Untersuchung** | | | | | |
|---|---|---|---|---|---|
| | SiO₂-Gehalt [%] | Härtung | K_{IC} [MPa·m^{1/2}] | G_{IC} [J/m²] | E [MPa] |
| a | 0 | HE600 | 0,47±0,05 | 77,2±22,0 | 3053±276 |
| b | 23 | HE600 | 0,78±0,02 | 147,7±7,9 | 4146±122 |
| c | 0 | UV | 0,28±0,05 | 26,2±8,4 | 3156±81 |
| d | 23 | UV | 0,43±0,04 | 47,0±6,1 | 3893±191 |
| e | 40 | UV | 0,51±0,04 | 45,7±7,6 | 5795±276 |

Die Versuchsergebnisse zeigen, daß sich mittels der erfindungsgemäßen SiO₂-Dispersion Bruchzähigkeit, Bruchenergie und E-Modul des polymeren Werkstoffes wesentlich verbessern lassen.

## Patentansprüche

1. Siliciumdioxid-Dispersion, die enthält:
a) eine äußere fließfähige Phase, die polymerisierbare Monomere, Oligomere und/oder Polymere enthält,
b) eine disperse Phase, die amorphes Siliciumdioxid enthält,
**dadurch gekennzeichnet, daß** die mittels Neutronenkleinwinkelstreuung (SANS) gemessene mittlere Teilchengröße dₘₐₓ des Siliciumdioxids zwischen 3 und 50 nm bei einer maximalen Halbwertsbreite der Verteilungskurve von 1,5 dₘₐₓ liegt.

2. Dispersion nach Anspruch 1, **dadurch gekennzeichnet, daß** die mittlere Teilchengröße zwischen 6 und 40 nm, vorzugsweise 8 und 30 nm, weiter vorzugsweise 10 und 25 nm liegt.

3. Dispersion nach Anspruch 1 oder 2, **dadurch gekennzeichnet, daß** die Halbwertsbreite der Verteilungskurve maximal 1,2 dₘₐₓ, vorzugsweise maximal dₘₐₓ, weiter vorzugsweise maximal 0,75 dₘₐₓ beträgt.

4. Dispersion nach Anspruch 1 oder 2, **dadurch gekennzeichnet, daß** die fließfähige Phase bei einer zwischen 18 und 100°C liegenden Temperatur den flüssigen Aggregatzustand einnimmt.

5. Dispersion nach einem der Ansprüche 1 bis 4, **dadurch gekennzeichnet, daß** der Anteil der äußeren Phase an der Dispersion 20-90 Gew.-%, vorzugsweise 30-80 Gew.-%, weiter vorzugsweise 40-70 Gew.-% beträgt.

6. Dispersion nach einem der Ansprüche 1 bis 5, **dadurch gekennzeichnet, daß** der Anteil der dispersen Phase an der Dispersion 10-80 Gew.-%, vorzugsweise 20-70 Gew.-%, weiter vorzugsweise 30-60 Gew.-% beträgt.

7. Dispersion nach einem der Ansprüche 1 bis 6, **dadurch gekennzeichnet, daß** die Siliciumdioxidteilchen im wesentlichen kugelförmig sind.

8. Dispersion nach einem der Ansprüche 1 bis 7, **dadurch gekennzeichnet, daß** sie zusätzlich Hilfsstoffe ausgewählt aus der Gruppe bestehend aus Lösungsmitteln, Weichmachern, Vernetzungsmitteln, Katalysatoren, Stabilisatoren, Dispergiermitteln, Härtungsmitteln, Reaktionsvermittlern und Mitteln zur Beeinflussung der Fließfähigkeit der Dispersion enthält.

9. Dispersion nach einem der Ansprüche 1 bis 8, **dadurch gekennzeichnet, daß** sie wasserfrei ist.

10. Dispersion nach einem der Ansprüche 1 bis 9, **dadurch gekennzeichnet, daß** die äußere Phase wenigstens einen Stoff ausgewählt aus der Gruppe bestehend aus Polyolen, Polyaminen, linearen oder verzweigten Polyglykolethern, Polyestern und Polylactonen.

11. Dispersion nach einem der Ansprüche 1 bis 9, **dadurch gekennzeichnet, daß** die äußere Phase wenigstens ein Reaktionsharz enthält.

12. Verfahren zur Herstellung einer Dispersion nach einem der Ansprüche 1 bis 11, **gekennzeichnet durch** folgende Schritte:
a) Vorlegen einer wäßrigen Silicatlösung,
b) Polykondensation des Silicats bis zu einer Teilchengröße von 3-50 nm,
c) Einstellen des erhaltenen Kieselsäuresols auf einen alkalischen pH-Wert,
d) optional Einengen des Sols,
e) Vermischen des Sols mit Bestandteilen der äußeren, fließfähigen Phase der Dispersion,
f) optional Entfernen von Wasser und/oder anderen Lösungsmittelbestandteilen aus der Dispersion.

13. Verfahren nach Anspruch 12, **dadurch gekennzeichnet, daß** die wäßrige Silicatlösung eine Alkalisilicatlösung, insbesondere eine Natrium- und/oder Kaliumsilicatlösung ist.

14. Verfahren nach Anspruch 13, **dadurch gekennzeichnet, daß** die Konzentration der wäßrigen Silicatlösung 20-50 Gew.-% beträgt.

15. Verfahren nach einem der Ansprüche 12 bis 14, **dadurch gekennzeichnet, daß** das Kieselsäuresol in Schritt c) auf einen pH-Wert zwischen 10 und 12 eingestellt wird.

16. Verfahren nach einem der Ansprüche 12 bis 15, **dadurch gekennzeichnet, daß** das Kieselsäuresol in Schritt d) auf eine Konzentration von 30-40 Gew.-% eingeengt wird.

17. Verfahren nach einem der Ansprüche 12 bis 16, **dadurch gekennzeichnet, daß** in Schritt f) Wasser entfernt wird mittels eines Verfahrens ausgewählt aus der Gruppe bestehend aus Destillation, Membrantrennung, Extraktion und Verwendung eines Molekularsiebs.

18. Verwendung einer Dispersion nach einem der Ansprüche 1 bis 11 zur Herstellung eines polymeren Werkstoffs.

19. Verwendung nach Anspruch 18, **dadurch gekennzeichnet, daß** der Werkstoff ausgewählt ist aus der Gruppe bestehend aus Polyurethanen, Polyharnstoffen, Epoxidharzen, Polyesterharzen und Polysiloxanen.

20. Verwendung nach Anspruch 18, **dadurch gekennzeichnet, daß** der Werkstoff ein duroplastischer Kunststoff ist.

21. Verwendung nach Anspruch 18, **dadurch gekennzeichnet, daß** der Werkstoff ein thermoplastischer Kunststoff ist.

22. Polymerer Werkstoff, **dadurch gekennzeichnet, daß** er aus einer Dispersion nach einem der Ansprüche 1 bis 11 hergestellt ist.
